# EUROPEAN PATENT APPLICATION

(11) **EP 4 528 960 A1**
(43) Date of publication of application: **26.03.2025**
(21) Application number: 23862531.3
(22) Date of filing: 08.09.2023
(51) Int. Cl.: H02J 3/12, H02M 5/12, H02M 5/18

(54) **VOLTAGE AMPLITUDE AND PHASE ADJUSTMENT APPARATUS AND METHOD, AND COMPUTER DEVICE AND STORAGE MEDIUM**

(30) Priority: 08.09.2022 CN 202211092905
(71) Applicant: State Grid Smart Grid Research Institute Co., Ltd., Beijing 102209 (CN)
(72) Inventor: MU, Xiaobin, Beijing 102209 (CN); CHEN, Guofu, Beijing 102209 (CN); WANG, Xiang, Beijing 102209 (CN); ZHAO, Guoliang, Beijing 102209 (CN); LI, Weiguo, Beijing 102209 (CN); YUAN, Peie, Beijing 102209 (CN); DAI, Fengjiao, Beijing 102209 (CN); CAI, Zhiyuan, Beijing 102209 (CN); GU, Weiming, Beijing 102209 (CN); LIU, Zhuangzhuang, Beijing 102209 (CN); MA, Mingyuan, Beijing 102209 (CN); XIAO, Chao, Beijing 102209 (CN); FAN, Rui, Beijing 102209 (CN)
(74) Representative: Mathys & Squire
(86) International application number: PCT/CN2023/117848
(87) International publication number: WO 2024/051838

(57) **Abstract**

A voltage amplitude and phase adjustment apparatus and method, and a computer device and a storage medium. The apparatus comprises: a three-phase multi-winding transformer, a first winding switch and a second winding switch, wherein a primary side of each phase of the three-phase multi-winding transformer comprises a first split winding and a second split winding. Ahead end of the first split winding is connected to an input end of the present phase, and a tail end of the first split winding is connected to a head end of the second split winding of the present phase by means of the first winding switch, and is connected to the head end of the second split winding of an adjacent phase by means of the second winding switch. By means of controlling the operating states of the winding switches, the connection mode of the split windings is switched, thereby widening the adjustment range of a circuit.

## Description

### .CROSS-REFERENCE TO RELATED APPLICATION

This application claims the priority of a Chinese patent application NO. 202211092905.7, filed to the China National Intellectual Property Administration on September 8, 2022, and entitled "VOLTAGE AMPLITUDE AND PHASE ADJUSTMENT APPARATUS AND METHOD", the disclosure of which is incorporated by reference herein in its entirety.

### TECHNICAL FIELD

The disclosure relates to the technical field of alternating current voltage regulation of a power system, in particular to an apparatus and method for regulating the amplitude and the phase of the voltage, a computer device and a storage medium.

### BACKGROUND

With the development of modem energy technology, renewable energy power generation and new-type loads are connected into the power grid on a large scale. Their new characteristics such as volatility and uncertainty pose higher challenges to the stable operation capability of the power grid. In particular, these new characteristics have had a significant impact on the voltage stability of the power grid, which will continue to affect the stable operation capability of the power grid.

Especially in the field of distribution grid, there are requirements for regulating magnitude and phase angle of voltage of a line, closed-loop operation of the distribution grid, etc., which are used to provide a stable power supply environment for renewable energy power generation connecting into the power grid and load power consumption, and to meet the necessary connection conditions for closed-loop operation of the distribution grid, etc. However, the existing transformer-based voltage regulation technology route has some problems such as limited voltage regulation range and insufficiently flexible regulation mode.

### SUMMARY

The technical problem to be solved by the disclosure is to overcome the defects of limited voltage regulation range and insufficiently flexible regulation mode in related art, and thus, an apparatus and method for regulating the amplitude and the phase of the voltage, a computer device and a storage medium are provided.

In order to achieve the above objectives, the technical solutions provided in the disclosure are as follows.

In a first aspect, an embodiment of the disclosure provides an apparatus for regulating amplitude and phase of voltage, which includes a three-phase multi-winding transformer, first winding switches and second winding switches.

A primary side of each phase of the three-phase multi-winding transformer includes a first split winding and a second split winding. A starting terminal of the first split winding is connected to an input terminal of the phase; and an ending terminal of the first split winding is connected to a starting terminal of the second split winding of the phase through a first winding switch, or, an ending terminal of the first split winding is connected to a starting terminal of a second split winding of an adjacent phase through a second winding switch.

Connection modes of the split windings are switched by controlling operating states of the first winding switches and the second winding switches, to regulate amplitudes and phases of three-phase input voltages.

In an example, the apparatus for regulating the amplitude and the phase of the voltage further includes multiple voltage regulating devices.

A secondary side of each phase of the three-phase multi-winding transformer includes a main winding and multiple secondary windings. A starting terminal of the main winding of each phase is connected to an output terminal of the phase, and the main winding of each phase is provided with multiple taps for selection and connection. Each secondary winding is provided with multiple asymmetric taps, and each secondary winding is correspondingly connected to one of the voltage regulating devices.

In an example, multiple taps are drawn out from an ending terminal of the second split winding at the primary side of each phase of the three-phase multi-winding transformer, and the second split winding is connected to one of the voltage regulating devices through the taps.

In an example, an ending terminal of the main winding at the secondary side of each phase of the three-phase multi-winding transformer, voltage regulating devices at secondary sides of adjacent phases and a voltage regulating device at a secondary side of the phase are sequentially connected.

In an example, an ending terminal of the main winding at the secondary side of each phase of the three-phase multi-winding transformer, voltage regulating devices at secondary sides of adjacent phases and a voltage regulating device at a primary side of the phase are sequentially connected.

In an example, in case that the ending terminal of the first split winding at the primary side of each phase of the three-phase multi-winding transformer is connected to the starting terminal of the second split winding of the phase through the first winding switch, the input terminal at the primary side of each phase, ending terminals of the second split windings at primary sides of adjacent phases, and the input terminal of the phase are connected, and the output terminal at the secondary side of each phase, ending terminals at the secondary sides of the adjacent phases, and the output terminal of the phase are connected.

In an example, the voltage regulating device is a switching bridge leg module or a switching array module, and the switching bridge leg module adopts a bridge structure.

In an example, a first neutral point is formed on the ending terminal of the second split winding at the primary side of each phase of the three-phase multi-winding transformer, and the first neutral point is grounded through a first grounding device. A second neutral point is formed on an output terminal of the voltage regulating device at an ending terminal of the secondary side of each phase of the three-phase multi-winding transformer, and the second neutral point is grounded through a second grounding device.

In an example, a center tap of the second split winding at the primary side of each phase of the three-phase multi-winding transformer is interconnected with each other to form a third neutral point, and the third neutral point is grounded through a third grounding device.

In a second aspect, an embodiment of the disclosure provides a method for regulating the amplitude and the phase of the voltage, which is based on the apparatus for regulating the amplitude and the phase of the voltage provided in the first aspect of the embodiment of the disclosure. The method for regulating the amplitude and the phase of the voltage includes the following operation.

Connection modes of the split windings are switched by controlling operating states of the first winding switches and the second winding switches, to regulate amplitudes and phases of three-phase input voltages.

In an example, by controlling operating states of the voltage regulating devices, vector transformation and synthesis processing are performed on the three-phase input voltages after the amplitudes and the phases are regulated.

In an example, the operation of switching connection modes of the split windings by controlling operating states of the first winding switches and the second winding switches, to regulate amplitudes and phases of three-phase input voltages, includes the following operation.

A first winding switch between a first split winding of each phase and a second split winding of the phase is turned on, and a second winding switch between the first split winding of the phase and a second split winding of an adjacent phase is turned off.

Alternatively, a second winding switch between a first split winding of each phase and a second split winding of an adjacent phase is turned on, and a first winding switch between the first split winding of the phase and a second split winding of the phase is turned off.

In a third aspect, an embodiment of the disclosure provides a computer device. The computer device includes a memory and a processor communicatively connected therebetween. The memory stores computer instructions that, when executed by the processor, cause the processor to implement the method for regulating the amplitude and the phase of the voltage described in the first aspect of the embodiment of the disclosure.

In a fourth aspect, an embodiment of the disclosure provides a computer-readable storage medium storing computer instructions that, when executed by a computer, cause the computer to implement the method for regulating the amplitude and the phase of the voltage described in the first aspect of the embodiment of the disclosure.

The technical solutions of the disclosure have the following advantages.

The apparatus for regulating the amplitude and the phase of the voltage is provided in the disclosure, and the apparatus includes a three-phase multi-winding transformer, first winding switches and second winding switches. A primary side of each phase of the three-phase multi-winding transformer includes a first split winding and a second split winding. A starting terminal of the first split winding is connected to an input terminal of the phase; and an ending terminal of the first split winding is connected to a starting terminal of the second split winding of the phase through a first winding switch, or, an ending terminal of the first split winding is connected to a starting terminal of a second split winding of an adjacent phase through a second winding switch. By controlling operating states of the winding switches, the connection modes of the split windings are switched, to regulate amplitudes and phases of three-phase input voltages. The design of the split windings at the primary side can further expand the regulation range of output voltage without adding the design of additional windings of the transformer, which is more conducive to the compact design of the transformer and is more applicable to the demand of large-step voltage regulation in special occasions. By controlling operating states of the winding switches, the connection modes of the split windings are switched, which can expand the voltage regulation range of the line.

The method for regulating the amplitude and the phase of the voltage is provided in the disclosure, the method includes that: connection modes of the split windings are switched by controlling operating states of the first winding switches and the second winding switches, to regulate amplitudes and phases of three-phase input voltages. By controlling operating states of the winding switches, the connection modes of the split windings are switched, which can expand the voltage regulation range of the line.

### BRIEF DESCRIPTION OF THE DRAWINGS

In order to more clearly describe technical solutions in specific implementations of the disclosure or the related art, the drawings needed to be used in the description of the specific implementations or the related art will be briefly introduced below. It is apparent that the drawings in the description below are some implementations of the disclosure, and other drawings can be obtained by those of ordinary skilled in the art from these drawings without any creative efforts.
FIG. 1 is a diagram of a topological structure of a specific example of an apparatus for regulating amplitude and phase of voltage according to an embodiment of the disclosure.
FIG. 2 is a schematic diagram of the voltage regulation range under operating mode 1 according to an embodiment of the disclosure.
FIG. 3 is a schematic diagram of the voltage regulation range under operating mode 2 according to an embodiment of the disclosure.
FIG. 4 is a diagram of a topological structure of another specific example of an apparatus for regulating amplitude and phase of voltage according to an embodiment of the disclosure.
FIG. 5 is a diagram of a topological structure of yet another specific example of an apparatus for regulating amplitude and phase of voltage according to an embodiment of the disclosure.
FIG. 6 is a diagram of a topological structure of a switching array module according to an embodiment of the disclosure.
FIG. 7 is a diagram of a topological structure of a switching bridge leg module according to an embodiment of the disclosure.
FIG. 8 is a flowchart of a specific example of a method for regulating amplitude and phase of voltage according to an embodiment of the disclosure.
FIG. 9 is a composition diagram of a specific example of a computer device according to an embodiment of the disclosure.

### DETAILED DESCRIPTION

The technical solutions of the disclosure will be clearly and completely described below with reference to the accompanying drawings. It is apparent that the embodiments described herein are only part of but not all of embodiments in the disclosure. Based on the embodiments in the disclosure, all other embodiments obtained by those of ordinary skilled in the art without any creative effort are within the scope of protection of the disclosure.

It should be noted that, in the description of the disclosure, the orientations or positional relationships indicated by the terms "center", "upper", "lower", "left", "right", "vertical", "horizontal", "inner", "outer", etc. are orientations or positional relationships illustrated based on the drawings, and are merely for the purpose of facilitating the description of the disclosure and simplifying the description, and do not indicate or imply that the referred device or element must have a specific orientation, be constructed and operated in a specific orientation, and therefore cannot be understood as a limitation of the disclosure. Furthermore, the terms "first," "second," and "third" are for descriptive purposes only and cannot be understood to indicate or imply relative importance.

In the description of the disclosure, it should be noted that, unless otherwise explicitly specified and defined, the terms "mount", "interconnect" and "connect" should be understood broadly. For example, the connection may be fixed, detachable, or integral. The connection may be mechanical or electrical. The connection may be a direct connection, an indirect connection through an intermediate medium, or an internal communication between two components. The connection may be a wireless connection or a wired connection. The specific meanings of the above terms in the disclosure will be understood by those of ordinary skilled in the art in accordance with specific conditions.

In addition, technical features involved in different embodiments of the disclosure described below may be combined with each other as long as they do not conflict with each other.

Embodiment of the disclosure provides an apparatus for regulating amplitude and phase of voltage, and the apparatus includes: a three-phase multi-winding transformer, first winding switches and second winding switches.

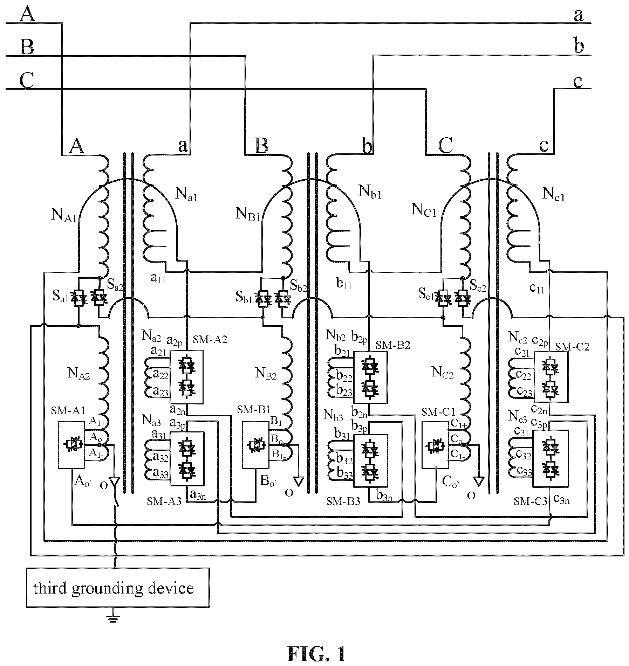

As illustrated in FIG. 1, the primary side of A-phase of the three-phase multi-winding transformer includes a first split winding N_{A1} and a second split winding N_{A2}. Herein, a starting terminal of the first split winding N_{A1} is connected to an input terminal of the A-phase, and an ending terminal of the first split winding N_{A1} is connected to a starting terminal of the second split winding N_{A2} of the A-phase through a first winding switch Sₐ₁. Alternatively, an ending terminal of the first split winding N_{A1} is connected to a starting terminal of a second split winding N_{B2} of B-phase through a second winding switch Sₐ₂. A center tap of the second split winding N_{A2} of the A-phase and a center tap of the second split winding N_{B2} of the B-phase are interconnected with each other to form a neutral point, and the neutral point is grounded through a grounding device.

The primary side of the B-phase of the three-phase multi-winding transformer includes a first split winding N_{B1} and a second split winding N_{B2}. Herein, a starting terminal of the first split winding N_{B1} is connected to an input terminal of the B-phase, and an ending terminal of the first split winding N_{B1} is connected to a starting terminal of the second split winding N_{B2} of the B-phase through a first winding switch S_{b1}. Alternatively, an ending terminal of the first split winding N_{B1} is connected to a starting terminal of the second split winding N_{C2} of C-phase through a second winding switch S_{b2}.

The primary side of the C-phase of the three-phase multi-winding transformer includes a first split winding N_{C1} and a second split winding N_{C2}. Herein, a starting terminal of the first split winding N_{C1} is connected to an input terminal of the C-phase, and an ending terminal of the first split winding N_{C1} is connected to a starting terminal of the second split winding N_{C2} of the C-phase through a first winding switch S_{c1}. Alternatively, an ending terminal of the first split winding N_{C1} is connected to a starting terminal of the second split winding N_{A2} of the A-phase through a second winding switch S_{c2}. A center tap of the second split winding N_{C2} of the C-phase, a center tap of the second split winding N_{A2} of the A-phase and a center tap of the second split winding N_{B2} of the B-phase are interconnected with each other to form a neutral point, and the neutral point is grounded through a grounding device.

In a specific embodiment, the connection modes of the split windings are switched by controlling operating states of the switches Sₐ₁, Sₐ₂, S_{b1}, S_{b2}, S_{c1}, S_{c2}, to regulate phases of three-phase input voltages. If only the phase is intended to change while the amplitude remains unchanged, it is necessary to regulate the taps on the main winding of the secondary side simultaneously (that is, changing the transformation ratio).

In the embodiment of the disclosure, the switch between the two split windings of the phase is turned on, and the switch connected to the split winding of the adjacent phase is turned off. Alternatively, the switch connected to the split winding of the adjacent phase is turned on, and the switch between the two split windings of the phase is turned off. By switching the connection modes of the split windings, the phase vectors of the three-phase input voltages are rotated by a preset angle to expand the adjustable range of the three-phase input voltage vectors.

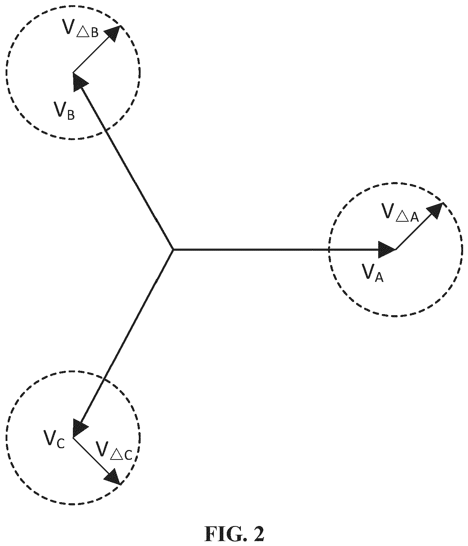

Specifically, 2 operating modes may be generated by controlling operating states of the switches Sₐ₁, Sₐ₂, S_{b1}, S_{b2}, S_{c1}, S_{c2}. Operating mode 1: when the switch (such as Sₐ₁, S_{b1}, S_{c1}) between the two split windings of the phase is turned on and the switch (such as Sₐ₂, S_{b2}, S_{c2}) connected to the split winding of the adjacent phase is turned off, the two split windings of the primary winding of each phase are connected, which is equivalent to only one winding at the primary side of the phase. At this time, the amplitude and the phase of the voltage need to be regulated by controlling the switching states of the voltage regulating devices, and the voltage regulation ranges of the voltage regulating devices are illustrated as the region within the circle at the ending terminal of the voltage vector of each phase in FIG. 2. Where, V_{A} is the voltage of the A-phase, V_{B} is the voltage of the B-phase, and Vc is the voltage of the C-phase. V_{ΔA} is the voltage regulation range of the A-phase, V_{ΔB} is the voltage regulation range of the B-phase, and V_{ΔC} is the voltage regulation range of the C-phase.

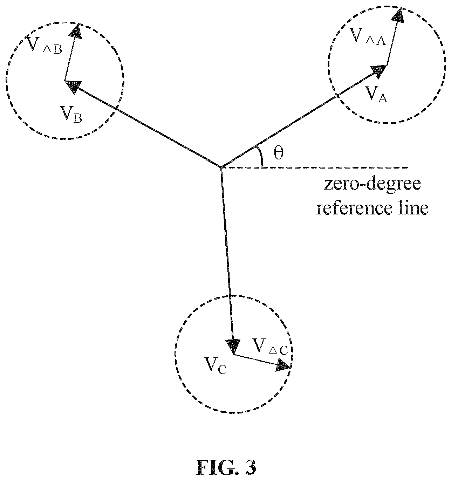

Operating mode 2: when the switch (such as Sₐ₂, S_{b2}, S_{c2}) connected to the split winding of the adjacent phase is turned on, and the switch (such as Sₐ₁, S_{b1}, S_{c1}) between the two split windings of the phase is turned off, the ending terminal of the first split winding of windings at the primary side of each phase is connected to the starting terminal of the second split winding of the adjacent phase, which is equivalent to two windings with different phases at the primary side of the phase. With the control of the switching states of the voltage regulating devices, the voltage regulation ranges of the voltage regulating devices are illustrated as the region within the circle at the ending terminal of the voltage vector of each phase in FIG. 3. Compared with the operating mode 1, the vector of the A-phase, the vector of the B-phase and the vector of the C-phase are rotated by an angle θ as a whole (θ may also be a negative value, that is, regulated in the opposite direction), that is, the adjustable range of the voltage vector of each phase is expanded. Different selections of the switches at the split windings are used to achieve coarse regulation, which realizes the dynamic expansion of the regulation range, and is more suitable for large-scale voltage regulation in fields such as power grids.

In the embodiment of the disclosure, the magnitude of the angle θ is related to the split position of the winding at the primary side, which is set through appropriate design or may be set by setting multiple taps for online selection. The split positions of the split windings at the primary side are different, which may not only change the angle of the output voltage, but also change the amplitude of the output voltage. Therefore, the multiple taps of the main winding at the secondary side are used to realize the auxiliary regulation of the magnitude of the output voltage.

The apparatus for regulating the amplitude and the phase of the voltage is provided in the disclosure, and the apparatus includes a three-phase multi-winding transformer, first winding switches and second winding switches. A primary side of each phase of the three-phase multi-winding transformer includes a first split winding and a second split winding. A starting terminal of the first split winding is connected to an input terminal of the phase; and an ending terminal of the first split winding is connected to a starting terminal of the second split winding of the phase through a first winding switch, or, an ending terminal of the first split winding is connected to a starting terminal of a second split winding of an adjacent phase through a second winding switch. The connection modes of the split windings are switched by controlling operating states of the winding switches, to regulate amplitudes and phases of three-phase input voltages. The design of the split windings at the primary side can further expand the regulation range of output voltage without adding the design of additional windings of the transformer, which is more conducive to the compact design of the transformer and is more applicable to the demand of large-step voltage regulation in special occasions. By controlling operating states of the winding switches, the connection modes of the split windings are switched, which can expand the voltage regulation range of the line.

In an embodiment, as illustrated in FIG. 1, the apparatus for regulating the amplitude and the phase of the voltage further includes multiple voltage regulating devices.

Herein, multiple taps are drawn out from the ending terminal of the second split winding at the primary side of each phase of the three-phase multi-winding transformer, and the ending terminal of the second split winding is connected to one of the voltage regulating devices through the taps. The secondary side of each phase of the three-phase multi-winding transformer includes a main winding and multiple secondary windings. The starting terminal of the main winding of each phase is connected to the output terminal of the phase, and the main winding of each phase is provided with multiple taps for selection and connection. Each of the multiple secondary windings is provided with multiple asymmetric taps, and each of the multiple secondary windings is correspondingly connected to one of the voltage regulating devices. The center tap of the second split winding at the primary side of each phase of the three-phase multi-winding transformer is interconnected with each other to form a third neutral point, and the third neutral point is grounded through a third grounding device. The third grounding device includes a resistor and an arc suppression device.

In a specific embodiment, a topological structure illustrated in FIG. 1 is taken as an example. Nₐ₁, N_{b1}, N_{c1} are the main windings at the secondary sides of the A-phase, the B-phase and the C-phase of the transformer, respectively. Nₐ₂ and Nₐ₃ are the secondary windings at the secondary side of the A-phase of the transformer, N_{b2} and N_{b3} are the secondary windings at the secondary side of the B-phase of the transformer, and N_{c2} and N_{c3} are the secondary windings at the secondary side of the C-phase of the transformer.

A is the starting terminal of the first split winding N_{A1} at the primary side, and is also the input terminal of the A-phase of the transformer. The ending terminal of the second split winding N_{A2} has three taps A₁₊, Aₒ, A₁₋ (the taps are not limited to three, and the number of the taps may be determined based on the voltage regulation range). The second split winding N_{A2} is connected to the voltage regulating device SM-A1 through the three taps A₁₊, Aₒ, A₁₋. Herein, Aₒ is the central tap of the A-phase and is connected to the neutral point O, and the neutral point O is grounded through the third grounding device.

Herein, a is the starting terminal of the main winding Nₐ₁ at the secondary side, and is also the output terminal of the A-phase of the transformer; a₁₁ is the ending terminal of the main winding Nₐ₁ at the secondary side; a₂₁, a₂₂, a₂₃ are the taps of the secondary winding Nₐ₂ at the secondary side of the A-phase, respectively; and a₃₁, a₃₂, a₃₃ are the taps of the secondary winding Nₐ₃. The number of turns included between adjacent taps is not necessarily the same, and the number of terminals is not limited to 3, and the number may be increased or decreased based on the voltage adjustment range. The secondary winding Nₐ₂ at the secondary side is connected to the voltage regulating device SM-A2 through the asymmetric taps a₂₁, a₂₂, a₂₃. The secondary winding Nₐ₃ at the secondary side is connected to the voltage regulating device SM-A3 through the asymmetric taps a₃₁, a₃₂, a₃₃.

B is the starting terminal of the first split winding N_{B1} at the primary side, and is also the input terminal of the B-phase of the transformer. The ending terminal of the second split winding N_{B2} has three taps B₁₊, Bₒ, B₁₋ (the taps are not limited to three, and the number of the taps may be determined based on the voltage regulation range). The second split winding N_{B2} is connected to the voltage regulating device SM-B1 through the three taps B₁₊, Bₒ, B₁₋. Herein, Bₒ is the central tap of the B-phase and is connected to the neutral point O, and the neutral point O is grounded through a grounding device.

Herein, b is the starting terminal of the main winding N_{b1} at the secondary side, and is also the output terminal of the B-phase of the transformer; b₁₁ is the ending terminal of the main winding N_{b1} at the secondary side; b₂₁, b₂₂, b₂₃ are the taps of the secondary winding N_{b2} at the secondary side of the B-phase, respectively; and b₃₁, b₃₂, b₃₃ are the taps of the secondary winding N_{b3}. The number of turns included between adjacent taps is not necessarily the same, and the number of terminals is not limited to 3, and the number may be increased or decreased based on the voltage adjustment range. The secondary winding N_{b2} at the secondary side is connected to the voltage regulating device SM-B2 through the asymmetric taps b₂₁, b₂₂, b₂₃. The secondary winding N_{b3} at the secondary side is connected to the voltage regulating device SM-B3 through the asymmetric taps b₃₁, b₃₂, b₃₃.

C is the starting terminal of the first split winding N_{C1} at the primary side, and is also the input terminal of the C-phase of the transformer. The ending terminal of the second split winding N_{C2} has three taps C₁₊, Cₒ, C₁₋ (the taps are not limited to three, and the number of the taps may be determined based on the voltage regulation range). The second split winding N_{C2} is connected to the voltage regulating device SM-C1 through the three taps C₁₊, Cₒ, C₁₋. Herein, Cₒ is the central tap of the C-phase and is connected to the neutral point O, and the neutral point O is grounded through a grounding device.

Herein, c is the starting terminal of the main winding N_{c1} at the secondary side, and is also the output terminal of the C-phase of the transformer; c₁₁ is the ending terminal of the main winding N_{c1} at the secondary side; c₂₁, c₂₂, c₂₃ are the taps of the secondary winding N_{C2} at the secondary side of the C-phase, respectively; and c₃₁, c₃₂, c₃₃ are the taps of the secondary winding N_{c3}. The number of turns included between adjacent taps is not necessarily the same, and the number of terminals is not limited to 3, and the number may be increased or decreased based on the voltage adjustment range. The main winding N_{c1} at the secondary side is connected to the voltage regulating device SM-C2 through the asymmetric taps c₂₁, c₂₂, c₂₃. The main winding N_{c3} at the secondary side is connected to the voltage regulating device SM-C3 through the asymmetric taps c₃₁, c₃₂, c₃₃.

Furthermore, as illustrated in FIG. 1, the ending terminal of the main winding at the secondary side of each phase of the three-phase multi-winding transformer, voltage regulating devices at secondary sides of adjacent phases and the voltage regulating device at the primary side of the phase are sequentially connected.

Specifically, the ending terminal a₁₁ of the main winding on the secondary side of the A-phase is connected to the output terminal b₂ₚ of the voltage regulating device SM-B2 of the B-phase, another output terminal b₂ₙ of the SM-B2 is connected to the output terminal c₃ₚ of the voltage regulating device SM-C3 of the C-phase, and another output terminal c₃ₙ of the SM-C3 is connected to the output terminal A_{o'} of the voltage regulating device SM-A1 at the primary side of the A-phase.

The ending terminal b₁₁ of the main winding on the secondary side of the B-phase is connected to the output terminal c₂ₚ of the voltage regulating device SM-C2 of the C-phase, another output terminal c₂ₙ of the SM-C2 is connected to the output terminal a₃ₚ of the voltage regulating device SM-A3 of the A-phase, and another output terminal a₃ₙ of the SM-A3 is connected to the output terminal B_{o'} of the voltage regulating device SM-B1 at the primary side of the B-phase.

The ending terminal c₁₁ of the main winding on the secondary side of the C-phase is connected to the output terminal a₂ₚ of the voltage regulating device SM-A2 of the A-phase, another output terminal a₂ₙ of the SM-A2 is connected to the output terminal b₃ₚ of the voltage regulating device SM-B3 of the B-phase, and another output terminal b₃ₙ of the SM-B3 is connected to the output terminal C_{o'} of the voltage regulating device SM-C1 at the primary side of the C-phase.

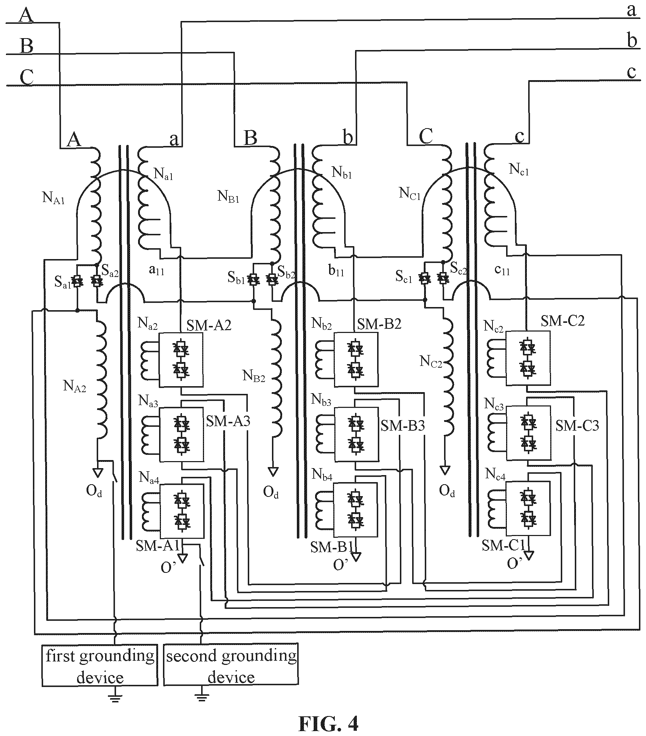

In an embodiment, the three-phase multi-winding transformer illustrated in FIG. 1 may also be replaced with the three-phase multi-winding transformer illustrated in FIG. 4. Compared with the three-phase multi-winding transformer in FIG. 1, in FIG. 4, a voltage regulating winding on the ending terminal of the primary winding of each phase of the three-phase multi-winding transformer is switched to the secondary side. As illustrated in FIG. 4, the secondary side of each phase of the three-phase multi-winding transformer includes a main winding and multiple secondary windings. The starting terminal of the main winding of each phase is connected to the output terminal of the phase, and the main winding of each phase is provided with multiple taps for selection and connection. Each of the multiple secondary windings is provided with multiple asymmetric taps, and each of the multiple secondary windings is correspondingly connected to one of the voltage regulating devices. A first neutral point is formed on the ending terminal of the second split winding at the primary side of each phase of the three-phase multi-winding transformer, and the first neutral point is grounded through a first grounding device. A second neutral point is formed on an output terminal of the voltage regulating device at an ending terminal of the secondary side of each phase of the three-phase multi-winding transformer, and the second neutral point is grounded through a second grounding device. Each of the first grounding device and the second grounding device includes a resistor and an arc suppression device.

In a specific embodiment, as illustrated in FIG. 4, the ending terminal of the main winding at the secondary side of each phase of the three-phase multi-winding transformer, voltage regulating devices at secondary sides of adjacent phases and the voltage regulating device at the primary side of the phase are sequentially connected.

Specifically, a voltage regulating winding and its corresponding voltage regulating device SM-A1 on the ending terminal of the second split winding N_{A2} of the A-phase are exchanged to the secondary side. The ending terminal a₁₁ of the main winding on the secondary side of the A-phase is connected to one terminal of the voltage regulating device SM-B2 of the B-phase, another terminal of the SM-B2 is connected to the output terminal of the voltage regulating device SM-C3 of the C-phase, and another output terminal of the SM-C3 is connected to the voltage regulating device SM-A1 at the secondary side of the A-phase. A first neutral point O_{d} is formed on the ending terminal of the second split winding N_{A2} at the primary side of the A-phase, and the first neutral point O_{d} is grounded through the first grounding device. The output terminal of the voltage regulating device SM-A1 at the ending terminal of the secondary side of the A-phase is connected to a neutral point O', and the neutral point O' is grounded through the second grounding device.

**A** voltage regulating winding and its corresponding voltage regulating device SM-B1 on the ending terminal of the second split winding N_{B2} of the B-phase are exchanged to the secondary side. The ending terminal b₁₁ of the main winding on the secondary side of the B-phase is connected to the output terminal of the voltage regulating device SM-C2 of the C-phase, another terminal of the SM-C2 is connected to the output terminal of the voltage regulating device SM-A3 of the A-phase, and another output terminal of the SM-A3 is connected to the voltage regulating device SM-B1 at the secondary side of the B-phase. A first neutral point O_{d} is formed on the ending terminal of the second split winding NB2 at the primary side of the B-phase, and the first neutral point O_{d} is grounded through the first grounding device. The output terminal of the voltage regulating device SM-B1 at the ending terminal of the secondary side of the B-phase is connected to a neutral point O', and the neutral point O' is grounded through the second grounding device.

A voltage regulating winding and its corresponding voltage regulating device SM-C1 on the ending terminal of the second split winding N_{C2} of the C-phase are exchanged to the secondary side. The ending terminal c₁₁ of the main winding on the secondary side of the C-phase is connected to the output terminal of the voltage regulating device SM-A2 of the A-phase, another terminal of the SM-A2 is connected to the output terminal of the voltage regulating device SM-B3 of the B-phase, and another output terminal of the SM-B3 is connected to the voltage regulating device SM-C1 at the secondary side of the C-phase. A first neutral point O_{d} is formed on the ending terminal of the second split winding N_{C2} at the primary side of the C-phase, and the first neutral point O_{d} is grounded through the first grounding device. The output terminal of the voltage regulating device SM-C1 at the ending terminal of the secondary side of the C-phase is connected to a neutral point O', and the neutral point O' is grounded through the second grounding device.

The two neutral points, the first neutral point Od and the second neutral point O', may be connected and then connected to a grounding device, or may be connected to different grounding devices, respectively. When applied to different lines connecting the power grid, it can better match the different requirements for the grounding modes of the two lines.

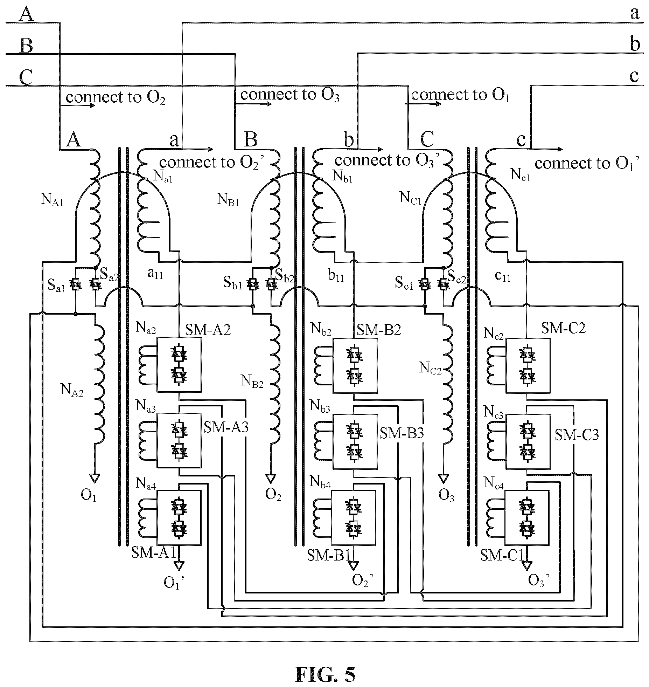

**In** an embodiment, as illustrated in FIG. 5, in case that the ending terminal of the first split winding at the primary side of each phase of the three-phase multi-winding transformer is connected to the starting terminal of the second split winding of the phase through the first winding switch, the input terminal at the primary side of each phase, ending terminals of the second split windings at primary sides of adjacent phases, and the input terminal of the phase are connected, and the output terminal at the secondary side of each phase, ending terminals at the secondary sides of the adjacent phases, and the output terminal of the phase are connected.

In a specific embodiment, if the switches Sₐ₁, S_{b1}, S_{c1} of the split windings at the primary side are turned on and the switches Sₐ₂, S_{b2}, S_{c2} are turned off, the split windings at the primary side form a separate winding. At this time, the input terminal at the primary side of the A-phase is connected to the ending terminal O₂ of the second split winding N_{B2} at the primary winding side of the B-phase, the input terminal at the primary side of the B-phase is connected to the ending terminal O₃ of the second split winding N_{C2} at the primary winding side of the C-phase, the input terminal at the primary side of the C-phase is connected to the ending terminal O₁ of the second split winding N_{A2} at the primary winding side of the A-phase, such that the primary sides form a triangle connection.

At the same time, the output terminal at the secondary side of the A-phase is connected to the ending terminal O₂' at the secondary side of the B-phase, the output terminal at the secondary side of the B-phase is connected to the ending terminal O₃' at the secondary side of the C-phase, the input terminal at the secondary side of the C-phase is connected to the ending terminal O₁' at the secondary side of the A-phase, such that the output terminals at the secondary sides form a triangle connection.

The advantage of the triangle connection is that it can prevent the influence of negative sequence components and zero sequence components of the three-phase system at the input side on the output side, or prevent the influence of negative sequence components and zero sequence components of the three-phase system at the output side on the input side.

**In** an embodiment, the voltage regulating device is a switching bridge leg module or a switching array module, and the switching bridge leg module adopts a bridge structure.

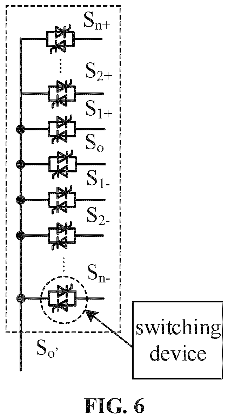

**In** a specific embodiment, as illustrated in FIG. 1, the second split winding at the primary side of each phase of the three-phase multi-winding transformer is an autotransformer winding, and at this time, the voltage regulating device correspondingly connected to the second split winding at the primary side of each phase is set as the switching array module as illustrated in FIG. 6. As illustrated in FIG. 6, S₁₊, Sₒ, S₁₋ are respectively one terminal of the three switches. S₁₊, Sₒ, S₁₋ are also the three input terminals of the switching array (the number of the switches may be correspondingly increased based on the number of taps of the winding), which may be connected to the three taps of the primary winding of each phase, respectively. The other terminals of the three switches are connected to form a terminal Sₒ', which is also the output terminal of the switching array module, for interconnecting with other modules. The design of taps of the ending terminal of the second split winding at the primary side not only saves the number of windings, at the secondary side, for voltage regulation, but also is conducive to the compact design and cost reduction of the device.

In the embodiment of the disclosure, the switching array module illustrated in FIG. 6 consists of multiple switching devices. Assuming that u1+ and u1- are output voltages between the center tap and the other two taps of the ending terminal of the second split winding at the primary side of each phase of the three-phase parallel transformer illustrated in FIG. 1, respectively. Multiple taps may be further drawn out from this winding to form multiple voltages (such as uₙ+, uₙ-), and each of the multiple taps of the winding is correspondingly connected to a switch. Taking the A-phase as an example, there are various different output voltage states between the output terminal A_{O'} of the switching array module and neutral points O. For example, when n = 1, there are 3 output voltage vectors:
(1) in case that the switch s₁₊ of the array is closed and the switches s₀ and s₁₋ of the array are open, the output voltage is u1+;
(2) in case that the switch s₀ of the array is closed and the switches s₁₊ and s₁₋ of the array are open, the output voltage is 0;
(3) in case that the switch s₁₋ of the array is closed and the switches s₀ and s₁₊ of the array are open, the output voltage is u1-.

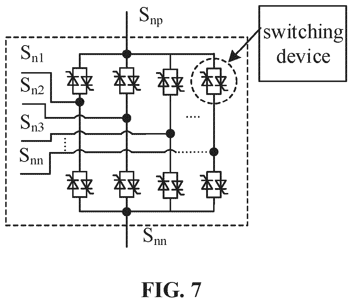

As illustrated in FIG. 1, FIG. 4 and FIG. 5, the multiple secondary windings at the secondary side of each phase of the three-phase multi-winding transformer are asymmetric windings. At this time, the voltage regulating devices correspondingly connected to the multiple secondary windings at the secondary side of each phase are set as the switching bridge leg module illustrated in FIG. 7. As illustrated in FIG.7, Sₙ₁, Sₙ₂, Sₙ₃ are the input terminals of the bridge leg module, respectively (the number of the switches may be correspondingly increased based on the number of taps of the winding), which may be connected to the three taps of the corresponding secondary winding. Sₙₚ and Sₙₙ are the output terminals of the bridge leg module, respectively, and are used for interconnecting with other modules or windings. Through the combined design of asymmetric multi-tap of the secondary windings at the secondary side of the transformer and the corresponding multi-bridge-leg switching module, the adjustment of wide range and refined multi-step of the voltage with as few switching devices as possible is realized, thereby reducing the cost and volume.

In the embodiment of the disclosure, the switching bridge leg module illustrated in FIG. 7 consists of multiple bridge leg switching devices. Assuming that u1 and u2 are the output voltages of the asymmetric windings of the parallel transformer, respectively, multiple taps may be further drawn out from the windings to output multiple voltages (such as uₙ). Taking the windings of the A-phase as an example, each of the multiple taps of the windings is correspondingly connected to a bridge leg, and there are various different output voltage states between the output terminals aₙₚ and aₙₙ of the switching bridge leg module. For example, when n = 2, there are 7 output voltage vectors:
(1) in case that the bridge leg switches s1 and s4 are closed and the bridge leg switches s2, s3, s5 and s6 are open, the output voltage is u1;
(2) in case that the bridge leg switches s3 and s6 are closed and the bridge leg switches s1, s2, s4 and s5 are open, the output voltage is u2;
(3) in case that the bridge leg switches s1 and s6 are closed and the bridge leg switches s2, s3, s4 and s5 are open, the output voltage is u1+u2;
(4) in case that the bridge leg switches s1 and s2 are closed and the bridge leg switches s3, s4, s5 and s6 are open, the output voltage is 0; alternatively, the bridge leg switches s3 and s4 are closed and the bridge leg switches s1, s2, s5 and s6 are open, the output voltage is also 0; alternatively, the bridge leg switches s5 and s6 are closed and the bridge leg switches s1, s2, s3 and s4 are open, the output voltage is also 0;
(5) in case that the bridge leg switches s2 and s5 are closed and the bridge leg switches s1, s3, s4 and s6 are open, the output voltage is -(u1+u2);
(6) in case that the bridge leg switches s4 and s5 are closed and the bridge leg switches s2, s3, s4 and s6 are open, the output voltage is -u2;
(7) in case that the bridge leg switches s2 and s3 are closed and the bridge leg switches s1, s4, s5 and s6 are open, the output voltage is -u1.

Due to the differences in amplitude and phase between the voltages output by the switching bridge leg modules of the adjacent phases and the voltage output by the switching array module of the phase, the voltages output by the switching bridge leg modules and the switching array modules of different phases are superimposed, and then are superimposed with the voltages of the main windings at the secondary side of the corresponding phases, thereby achieving various regulation effects on the magnitudes and the phases of the input voltages. For example, when the number of bridge legs corresponding to the secondary windings at the secondary side is n = 3, and the switching array corresponding to the ending terminal of the second split winding at the primary side is n = 1, 3 × 7 × 7 = 147 vector outputs can be realized by connecting one switching array module of the phase in series with two switching bridge leg modules of the adjacent phases. For FIG. 4 and FIG. 5, because each of the secondary windings at the secondary side is a switching bridge leg module and there are 3 secondary windings at the secondary side of each phase, there are 7 × 7 × 7 = 343 vector outputs in total.

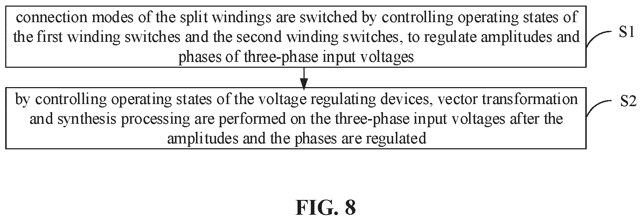

The embodiment of the disclosure further provides a method for regulating the amplitude and the phase of the voltage, which is based on the apparatus for regulating the amplitude and the phase of the voltage illustrated in FIG. 1, FIG. 4 and FIG. 5. The method for regulating the amplitude and the phase of the voltage is as illustrated in FIG. 8 and includes the following operations.

In operation S1: connection modes of the split windings are switched by controlling operating states of the first winding switches and the second winding switches, to regulate amplitudes and phases of three-phase input voltages.

In a specific embodiment, the operation S1 includes the following operations.

In operation S11: a first winding switch between a first split winding of each phase and a second split winding of the phase is turned on, and a second winding switch between the first split winding of the phase and a second split winding of an adjacent phase is turned off.

In operation S12: alternatively, a second winding switch between a first split winding of each phase and a second split winding of an adjacent phase is turned on, and a first winding switch between the first split winding of the phase and a second split winding of the phase is turned off.

In a specific embodiment, the switch between the two split windings of the phase is turned on, and the switch connected to the split winding of the adjacent phase is turned off. Alternatively, the switch connected to the split winding of the adjacent phase is turned on, and the switch between the two split windings of the phase is turned off. By switching the connection modes of the split windings, the phase vectors of the three-phase input voltages are rotated by a preset angle to expand the adjustable range of the three-phase input voltage vectors.

Specifically, 2 operating modes may be generated by controlling operating states of the switches Sₐ₁, Sₐ₂, S_{b1}, S_{b2}, S_{c1}, S_{c2}. Operating mode 1: when the switch (such as Sₐ₁, S_{b1}, S_{c1}) between the two split windings of the phase is turned on and the switch (such as Sₐ₂, S_{b2}, S_{c2}) connected to the split windings of the adjacent phase is turned off, the two split windings of the primary winding of each phase are connected, which is equivalent to only one winding at the primary side of the phase. At this time, the amplitude and the phase of the voltage need to be regulated by controlling the switching states of the voltage regulating devices, and the voltage regulation ranges of the voltage regulating devices are illustrated as the region within the circle at the ending terminal of the voltage vector of each phase in FIG. 2. Where, V_{A} is the voltage of the A-phase, V_{B} is the voltage of the B-phase, and Vc is the voltage of the C-phase. V_{ΔA} is the voltage regulation range of the A-phase, V_{ΔB} is the voltage regulation range of the B-phase, and V_{ΔC} is the voltage regulation range of the C-phase.

Operating mode 2: when the switch (such as Sₐ₂, S_{b2}, S_{c2}) connected to the split windings of the adjacent phase is turned on, and the switch (such as Sₐ₁, S_{b1}, S_{c1}) between the two split windings of the phase is turned off, the ending terminal of the first split winding of windings at the primary side of each phase is connected to the starting terminal of the second split winding of the adjacent phase, which is equivalent to two windings with different phases at the primary side of the phase. With the control of the switching states of the voltage regulating devices, the voltage regulation ranges of the voltage regulating devices are illustrated as the voltage vector of each phase in FIG. 3. Compared with the operating mode 1, the vector of the A-phase, the vector of the B-phase and the vector of the C-phase are rotated by an angle θ as a whole (θ may also be a negative value, that is, regulated in the opposite direction), that is, the adjustable range of the voltage vector of each phase is expanded. Different selections of the switches at the split windings are used to achieve coarse regulation, which realizes the dynamic expansion of the regulation range, and is more suitable for large-scale voltage regulation in fields such as power grids.

In the embodiment of the disclosure, the magnitude of the angle θ is related to the split position of the winding at the primary side, which is set through appropriate design or may be set by setting multiple taps for online selection. The split positions of the split windings at the primary side are different, which may not only change the angle of the output voltage, but also change the amplitude of the output voltage. Therefore, the multiple taps of the main winding at the secondary side are used to realize the auxiliary regulation of the magnitude of the output voltage.

In operation S2: by controlling operating states of the voltage regulating devices, vector transformation and synthesis processing are performed on the three-phase input voltages after the amplitudes and the phases are regulated.

In a specific embodiment, through the cooperation of winding switches and voltage regulating devices, vector transformation and synthesis processing are performed on the three-phase input voltages before being output, so that the magnitudes and the phases of the three-phase input voltages are regulated.

In embodiments of the disclosure, by selecting different switching states among winding switches, switching arrays, and switching bridge legs, vector transformation and synthesis processing are performed on the three-phase input voltages before being output, thereby achieving an effect of a wide range regulation for the magnitudes and the phases of the input voltages.

Specifically, due to the differences in amplitude and phase between the voltages output by the switching bridge leg modules of the adjacent phases and the voltages output by the switching array module of the phase, the voltages output by the switching bridge leg modules and the switching array modules of different phases are superimposed, and then are superimposed with the voltages of the main windings at the secondary side of the corresponding phases, thereby realizing various regulation effects on the magnitudes and the phases of the input voltages.

Furthermore, different selections of the winding switches at the split winding are used to achieve coarse regulation, and different selections of states of the switching arrays and the switching bridge legs are used to achieve fine regulation, which realizes the dynamic expansion of the regulation range, and is more suitable for large-scale voltage regulation in fields such as power grids. In embodiments of the disclosure, the winding switches, the switching arrays, and the switching bridge legs at the split positions of the windings at the primary side are constructed of switching devices with bidirectional current conduction capability. These switching devices are switching devices constructed of power semiconductors, mechanical switching devices or other switching devices.

The method for regulating the amplitude and the phase of the voltage is provided in the disclosure, the method includes that: connection modes of the split windings are switched by controlling operating states of the first winding switches and the second winding switches, to regulate amplitudes and phases of three-phase input voltages. The connection modes of the split windings are switched by controlling operating states of the winding switches, which can expand the voltage regulation range of the line.

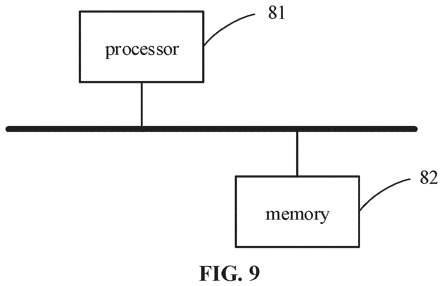

The embodiment of the disclosure provides a computer device, as illustrated in FIG. 9, the computer device may include a processor 81 and a memory 82. The processor 81 and the memory 82 may be connected by a bus or other means, and the processor 81 and the memory 82 being connected by a bus is exemplified in FIG.9.

The processor 81 may be a central processing unit (CPU). The processor 81 may also be a chip such as other general-purpose processor, a digital signal processor (DSP), an application specific integrated circuit (ASIC), a field-programmable gate array (FPGA) or other programmable logic devices, a discrete gate or transistor logic device, or a discrete hardware component, or a combination of the above.

The memory 82, as a non-transitory computer-readable storage medium, may be used to store non-transitory software programs, non-transitory computer-executable programs, and modules, such as corresponding program instructions/modules in the embodiments of the disclosure. The processor 81 executes non-transitory software programs, instructions, and modules stored in the memory 82, to perform various functional applications and data processing of the processor, that is, to implement the method for regulating amplitude and phase of voltage in the method embodiments described above.

The memory 82 may include a program storage area and a data storage area. The program storage area may store an operating system and an application program required for at least one function, and the data storage area may store data created by the processor 81, or the like. In addition, the memory 82 may include high-speed random access memory and may also include non-transitory memory, such as at least one magnetic disk storage device, flash memory device, or other non-transitory solid-state storage device. In some embodiments, the memory 82 optionally includes memory remotely located with respect to the processor 81, and the remote memory may be connected to the processor 81 via the network. Instances of the above network include, but are not limited to, the Internet, an intranet, an intranet, a mobile communication network, and combinations thereof.

The memory 82 has stored therein one or more modules that, when executed by the processor 81, implement the method for regulating amplitude and phase of voltage described above.

The specific details of the computer device described above can be understood by referring to the corresponding related descriptions and effects of the embodiments illustrated in FIG. 1 to FIG. 8, which will not be repeated herein.

It will be understood by those skilled in the art that all or part of the processes in the methods of the above embodiments may be implemented by instructing related hardwares by a computer program, and the computer program may be stored in a computer-readable storage medium, and when executed, the program may include the processes of the embodiments of the above methods. The storage medium may be a magnetic disk, an optical disk, a read-only memory (ROM), a random access memory (RAM), a flash memory (Flash Memory), a hard disk drive (HDD), a solid-state drive (SSD), or the like. The storage medium may further include a combination of the above kinds of memories.

It is apparent that the embodiments described above are merely examples for clarity of description and are not limiting the implementations. For those of ordinary skilled in the art, further changes or variations in different forms can be made based on the above description. It is unnecessary and impossible to enumerate all possible embodiments here. However, the apparent changes or variations derived therefrom still fall within the scope of protection of the disclosure.

### Industrial Applicability

In the disclosure, an apparatus and method for regulating the amplitude and the phase of the voltage, a computer device and a storage medium are provided. The apparatus includes a three-phase multi-winding transformer, first winding switches and second winding switches. A primary side of each phase of the three-phase multi-winding transformer includes a first split winding and a second split winding. A starting terminal of the first split winding is connected to an input terminal of the phase, and an ending terminal of the first split winding is connected to a starting terminal of the second split winding of the phase through a first winding switch, or an ending terminal of the first split winding is connected to a starting terminal of a second split winding of an adjacent phase through a second winding switch. That is to say, in the disclosure, the connection modes of the split windings are switched by controlling operating states of the winding switches, to regulate amplitudes and phases of three-phase input voltages. The design of the split windings at the primary side can further expand the regulation range of output voltage without adding the design of additional windings of the transformer, which is more conducive to the compact design of the transformer and is more applicable to the demand of large-step voltage regulation in special occasions. By controlling operating states of the winding switches, the connection modes of the split windings are switched, which can expand the voltage regulation range of the line.

## Claims

1. An apparatus for regulating amplitude and phase of voltage, comprising: a three-phase multi-winding transformer, first winding switches and second winding switches, wherein
a primary side of each phase of the three-phase multi-winding transformer comprises a first split winding and a second split winding, wherein a starting terminal of the first split winding is connected to an input terminal of the phase, and an ending terminal of the first split winding is connected to a starting terminal of the second split winding of the phase through a first winding switch, or an ending terminal of the first split winding is connected to a starting terminal of a second split winding of an adjacent phase through a second winding switch; and
connection modes of the split windings are switched by controlling operating states of the first winding switches and the second winding switches, to regulate amplitudes and phases of three-phase input voltages.

2. The apparatus for regulating the amplitude and the phase of the voltage of claim 1, further comprising: a plurality of voltage regulating devices, wherein
a secondary side of each phase of the three-phase multi-winding transformer comprises a main winding and a plurality of secondary windings; and wherein a starting terminal of the main winding of each phase is connected to an output terminal of the phase, and the main winding of each phase is provided with a plurality of taps for selection and connection; and each of the plurality of secondary windings is provided with a plurality of asymmetric taps, and each of the plurality of secondary windings is correspondingly connected to one of the voltage regulating devices.

3. The apparatus for regulating the amplitude and the phase of the voltage of claim 2, wherein a plurality of taps are drawn out from an ending terminal of the second split winding at the primary side of each phase of the three-phase multi-winding transformer, and the second split winding is connected to one of the voltage regulating devices through the taps.

4. The apparatus for regulating the amplitude and the phase of the voltage of claim 2, wherein an ending terminal of the main winding at the secondary side of each phase of the three-phase multi-winding transformer, voltage regulating devices at secondary sides of adjacent phases and a voltage regulating device at a secondary side of the phase are sequentially connected.

5. The apparatus for regulating the amplitude and the phase of the voltage of claim 3, wherein an ending terminal of the main winding at the secondary side of each phase of the three-phase multi-winding transformer, voltage regulating devices at secondary sides of adjacent phases and a voltage regulating device at a primary side of the phase are sequentially connected.

6. The apparatus for regulating the amplitude and the phase of the voltage of claim 4, wherein in case that the ending terminal of the first split winding at the primary side of each phase of the three-phase multi-winding transformer is connected to the starting terminal of the second split winding of the phase through the first winding switch, the input terminal at the primary side of each phase, ending terminals of the second split windings at primary sides of adj acent phases, and the input terminal of the phase are connected, and the output terminal at the secondary side of each phase, ending terminals at the secondary sides of the adjacent phases, and the output terminal of the phase are connected.

7. The apparatus for regulating the amplitude and the phase of the voltage of claim 2 or 3, wherein the voltage regulating device is a switching bridge leg module or a switching array module, and the switching bridge leg module adopts a bridge structure.

8. The apparatus for regulating the amplitude and the phase of the voltage of claim 4, wherein a first neutral point is formed on the ending terminal of the second split winding at the primary side of each phase of the three-phase multi-winding transformer, and the first neutral point is grounded through a first grounding device; and a second neutral point is formed on an output terminal of the voltage regulating device at an ending terminal of the secondary side of each phase of the three-phase multi-winding transformer, and the second neutral point is grounded through a second grounding device.

9. The apparatus for regulating the amplitude and the phase of the voltage of claim 5, wherein a center tap of the second split winding at the primary side of each phase of the three-phase multi-winding transformer is interconnected with each other to form a third neutral point, and the third neutral point is grounded through a third grounding device.

10. A method for regulating the amplitude and the phase of the voltage based on the apparatus for regulating the amplitude and the phase of the voltage of any one of claims 1-9, the method for regulating the amplitude and the phase of the voltage comprising:
switching connection modes of the split windings by controlling operating states of the first winding switches and the second winding switches, to regulate amplitudes and phases of three-phase input voltages.

11. The method for regulating the amplitude and the phase of the voltage of claim 10, further comprising:
by controlling operating states of the voltage regulating devices, performing vector transformation and synthesis processing on the three-phase input voltages after the amplitudes and the phases are regulated.

12. The method for regulating the amplitude and the phase of the voltage of claim 10, wherein switching the connection modes of the split windings by controlling the operating states of the first winding switches and the second winding switches, to regulate the amplitudes and the phases of the three-phase input voltages, comprises:
turning on a first winding switch between a first split winding of each phase and a second split winding of the phase, and turning off a second winding switch between the first split winding of the phase and a second split winding of an adjacent phase; or
turning on a second winding switch between a first split winding of each phase and a second split winding of an adjacent phase, and turning off a first winding switch between the first split winding of the phase and a second split winding of the phase.

13. A computer device comprising: a memory and a processor communicatively connected therebetween, wherein the memory stores computer instructions that, when executed by the processor, cause the processor to implement the method for regulating the amplitude and the phase of the voltage of any one of claims 10-12.

14. A computer-readable storage medium storing computer instructions that, when executed by a computer, cause the computer to implement the method for regulating the amplitude and the phase of the voltage of any one of claims 10-12.
